# EUROPÄISCHE PATENTANMELDUNG

(11) **EP 1 201 294 A1**
(43) Veröffentlichungstag der Anmeldung: **02.05.2002**
(21) Anmeldenummer: 01121765.0
(22) Anmeldetag: 19.09.2001
(51) Int. Cl.: B01D 63/08, B01D 69/10

(54) **Membranfilterkissen**

(30) Priorität: 30.10.2000 DE 10053752
(71) Anmelder: ICTechnology AG, 88212 Ravensburg (DE)
(72) Erfinder: Vardic, Aladin, 88364 Wolfegg (DE); Maier, Joseph, 88212 Ravensburg (DE)
(74) Vertreter: Muschke, Markus, Dipl.-Phys.

(57) **Zusammenfassung**

Die vorliegende Erfindung betrifft eine Filtereinrichtung mit einer Filtermembranfolie (6), die für diverse Filtrationszwecke eingesetzt werden kann, wobei die Filtermembranfolie (6) auf einen für ein Permeat durchlässigen Träger (7) aufgebracht ist.

## Beschreibung

Die Erfindung betrifft eine Filtereinrichtung mit einer Filtermembranfolie für die Mikrofiltration, die Ultrafiltration, die Nanofiltration bzw. die Umkehrosmose, zur Filterung eines Mediums, gemäß dem Oberbegriff des Patentanspruchs 1.

Sowohl in der Industrie als auch in Privathaushalten fallen immer mehr Abwässer an, die nach Gesetzen oder Richtlinien des Umweltschutzes zu behandeln sind. So können in der Papierindustrie und insbesondere auch in der Altpapier verarbeitenden Industrie Produktionsabwässer anfallen, die stark belastet sind. Die Entsorgung dieser Abwässer und die Zufuhr von Frischwasser stellen gegenwärtig einen maßgeblichen Kostenfaktor bei diversen Produktionsprozessen dar, nicht nur in der Papierindustrie. D.h., die Industrie hat immer mehr Einsatzmöglichkeiten, um Filtrationsanlagen einzusetzen, die ein Abwasser so weit reinigen, dass es nach Möglichkeit wieder als Frischwasser eingesetzt werden kann, wobei Fremdstoffe aus dem Wasser so weit als möglich zu entfernen sind. Die Fremdstoffe sind aufzukonzentrieren und das Konzentrat kann dann relativ kostengünstig weiterverarbeitet und entsorgt werden.

Um diesen Anforderungen der Industrie zu genügen, sind bereits seit einiger Zeit Module mit Filterkissen bekannt, bei denen die Oberfläche einer organischen oder anorganischen Filtermembran mit einem zu filternden Abwasser angeströmt wird. Bevorzugt werden im Stand der Technik Membrankissen eingesetzt, die aus einem festen Körper mit einer darauf aufgebrachten Membran bestehen. In der Regel werden Membranen eingesetzt, die beispielsweise aus keramischem Material hergestellt sind. Derartige feste Membranen sind in der Filtrationsanlage leichter zu reinigen. Es ist hier möglich, durch die Filtration auf der Membranoberfläche angelagerte Störstoffe zu entfernen, indem eine Rückspülung erfolgt, beispielsweise durch kurze Druckstöße, die die Störstoffe von der Membranoberfläche ablösen. Die Störstoffe können dann stark aufkonzentriert abgeleitet werden, bevor der Filtrationsvorgang fortgesetzt wird. Ein Reinigungsmitteln, das auch eingesetzt werden kann, um die Störstoffe noch effektiver von der Membranoberfläche abzulösen, muss bei einer derartigen Anordnung auch nur in vergleichsweise geringen Mengen eingesetzt werden. Auch die Störstoffe, die durch biologische oder mikrobiologische Prozesse entstehen, wie etwa das Wachstum von Bakterien und dgl. lässt sich auf diese Weise mittels relativ geringem Aufwand entfernen.

Nachteilig bei dieser Art von Filtermembranen ist, dass diese in Bezug auf ihre Herstellung als sehr kostenintensiv anzusehen sind.

Eine weitere Art von Filtermembranen ist in der Form von Membranfolien bereits bekannt. Derartige Membranfolien lassen sich jedoch nicht rückspülen, da der Druck, der für eine derartige Rückspülung erforderlich wäre, die Membranfolie sofort platzen lassen würde.

Membranfolien werden beispielsweise in Filtrationsmodulen eingesetzt, die eine Bewegung durchführen, wodurch in Folge der Bewegung Störstoffe in geringerem Umfang oder gar nicht auf der Oberfläche einer Membranfolie ablagern.

Es wird auch ein Reinigungsverfahren für Filtermembranen im Stand der Technik verfolgt, bei dem die Membranoberfläche stetig mit einem Gasstrom innerhalb des zu filternden Abwassers beaufschlagt wird, um durch die damit bewirkten Turbulenzen abgelagerte Störstoffe und biologische Rückstände, beispielsweise durch Biofouling, fortwährend zu entfernen.

Es ist eine Aufgabe gemäß der vorliegenden Erfindung, eine neue Art von Filtereinrichtung auf der Basis einer Filtermembranfolie vorzuschlagen, die kostengünstig herstellbar ist und die trotzdem mit geringem Aufwand gereinigt bzw. rückgespült werden kann.

Diese Aufgabe wird durch eine Filtereinrichtung mit dem im Patentanspruch 1 aufgeführten Merkmalen gelöst.

Zweckmäßige Ausführungsformen gemäß der Erfindung gehen aus den Unteransprüchen hervor.

Dabei ist darauf zu verweisen, dass insbesondere auch das Merkmal im abhängigen Anspruch 6 durchaus als selbständige Erfindung angesehen werden könnte.

Die gemäß der Erfindung erzielbaren Vorteile beruhen darauf, dass die Filtermembranfolie auf einem für das zu filternde Medium durchlässigen Träger aufgebracht ist. Durch die mechanische Festlegung der Filtermembranfolie an dem durchlässigen Träger kann die Folie überraschenderweise soweit stabilisiert werden, dass eine Rückspülung der Filtermembranfolie möglich wird, ohne dass die Folie dabei durch den während der Rückspülung auftretenden Druck zerplatzt.

Der Träger kann vorteilhafterweise als poröser Trägerabschnitt ausgebildet sein. Ein derartiger poröser Trägerabschnitt weist zum Einen eine große Anzahl von Durchgängen auf und ist zum Anderen mit einer relativ großen Oberfläche versehen, die mit der abzustützenden Filtermembranfolie zur Anlage gebracht werden kann. Das zu filternde Medium wird von der Seite auf die Filtermembranfolie appliziert, die von dem Träger abgewandt ist. Das gefilterte Permeat wird über die Poren und Porengänge des porösen Trägerabschnitts von der Rückseite der Filtermembranfolie abgeleitet.

Grosse Vorteile haben sich ergeben, wenn bei Versuchen die Filtermembranfolie auf ein Trägergewebe aufgebracht worden ist, beispielsweise aufgeklebt wurde. Bevorzugt ist das Gewebe ein mehrlagiges Gewebe. Die Filtermembranfolie kann auch auf das Gewebe aufgespritzt, aufgeschweißt oder sonst wie aufgetragen sein. Wesentlich ist, dass zum Einen eine große Oberfläche durch das Trägergewebe zur Verfügung gestellt wird, so dass nur geringe freitragende Bereiche der Filtermembranfolie letztendlich vorhanden sind. Andererseits müssen die noch vorhandenen freitragenden Bereiche eine große Oberfläche ergeben, so dass die Filtrationsleistung möglichst groß bleibt. Das Trägergewebe ist nahe der Membranfolie möglichst feinmaschig und nimmt in seiner Grobheit mit der Entfernung zu der Membranfolie zu. D.h., in Bezug auf ein mehrlagiges Trägergewebe, das die erste Lage, die nahe der Membranfolie ist, ein relativ feines Gespinst ist, während die nachfolgenden Lagen mit zunehmender Entfernung zu der Membranfolie immer grobmaschiger werden können. Dabei wird das Trägergewebe in der Regel eine Dicke von wenigen Millimetern bis zu einem Zentimeter haben. Natürlich sind auch dünnere Trägergewebe wie auch dickere Trägergewebe durchaus im Rahmen der Möglichkeiten.

Die Filtermembranfolie mit dem daran angebrachten Träger wird anschließend auf eine Basis aufgebracht, die einen steifen Grundkörper bildet. Die Basis kann eine Struktur aufweisen, die Strömungsleitungen, -kanäle oder dgl. für das gefilterte Medium, d.h. das Permeat zur Verfügung stellt. Ein derart ausgebildetes Membranfilterkissen bzw. eine derart ausgebildete erfindungsgemäße Filtereinrichtung kann als Membrankissen beispielsweise zusammen mit anderen gleichermaßen aufgebauten Filtereinrichtungen etwa in ein Rohr eingebracht werden, so dass die Filtereinrichtungen gemäß der Erfindung eine möglichst große Fläche für den eigentlichen Filterungsvorgang zur Verfügung stellen können. Die einzelnen Filtereinrichtungen bilden hierbei einen Filtereinrichtungsstapel (Modul), um auf möglichst engem Raum die gewünschte große Filterkapazität bereitstellen zu können. Dabei wird in das Aufnahmerohr oder Kammern für die Filtereinrichtungsstapel von der einen Seite her das verschmutzte Abwasser eingeleitet und unter Druck über die erfindungsgemäßen Filtereinrichtungen bzw. Membrankissen hinweggeleitet, die auch in Form von mehreren Stapeln bzw. Modulen hintereinander und/oder parallel vorgesehen sein können. Auf der gegenüberliegenden Seite des Rohres wird ein stark aufkonzentriertes Abwasser abgeleitet. Die einzelnen Filtereinrichtungen sind über Ableitungen und Verbindungsleitungen miteinander kurzgeschlossen, so dass durch die Filtermembranfolien hindurchgetretenes gereinigtes Abwasser, d.h., Permeat, das über die Träger und die diversen Basen bzw. die in den Basen vorgesehenen Strukturen abgeleitet worden ist, zusammengeführt werden kann.

Damit ergibt sich in einer bevorzugten Ausführungsform ein Aufbau mit einer Filtermembranfolie und einem Träger sowie einer Basis, wobei das Permeat, das durch die Filtermembranfolie hindurchgetreten ist, durch den Träger, etwa einen porösen Trägerabschnitt oder ein Trägergewebe hindurchtritt, um anschließend in der Leitungsstruktur der Basis aufgefangen zu werden, von wo aus das Permeat abgeleitet wird, um mit dem Permeat vereinigt zu werden, das von diversen anderen Filtereinrichtungen stammt. Dabei kann der Träger mit der Basis, die aus Kunststoff oder anorganischen Stoffen hergestellt sein kann, etwa durch Verschweißen oder Vergießen, Verkleben oder sonst wie mechanisch verbunden werden. Die Basis kann dabei beispielsweise mit Rillen, Noppen, Mäanderformen oder sonstigen Strukturen versehen sein, wenn hierdurch nur Freiräume und Leitungskanäle gebildet werden.

Eine besonders zu bevorzugende Ausführungsform ergibt sich natürlich, wenn eine Basis von jeder ihrer Seiten her mit einem Träger und einer darauf befindlichen Filtermembranfolie bestückt wird. Dementsprechend wird dann die Basis natürlich auch auf jeder ihrer Seiten mit entsprechenden Strukturen zur Bereitstellung von Hohlräumen und Leitungskanälen versehen sein.

An den seitlichen Endkanten entsprechender Anordnungen einer Basis, einer oder mehrerer Träger sowie einer oder mehrer Filtermembranfolien wird ein dichtender Abschluss beispielsweise in der Form einer Art von Rahmen vorgesehen, der lediglich an einer Stelle geöffnet ist, um den Permeatfluss aus dieser Anordnung sicherzustellen.

Die Basis selber kann beispielsweise aus Metall, Sintermetall, Kunststoff, porösem Kunststoff, poröser Keramik, porösem Glas oder anderen Materialien hergestellt werden. Der Permeatfluss kann dabei entweder durch die Strukturen, die in die Basis eingebracht werden, oder alternativ bzw. zusätzlich durch die eventuell porösen Eigenschaften des Materials bewerkstelligt werden.

Weiterhin kann gemäß der Erfindung eine besonders vorteilhafte Ausführungsform für eine Filtermembranfolie bereitgestellt werden, wenn diese mit einer Turbulenzstruktur versehen ist. Die Turbulenzstruktur sorgt für Strömungsturbulenzen in dem an der Filtermembranfolie vorbeigeführten belasteten Abwasser, so dass die Turbulenzen Störstoffe von der Oberfläche der Filtermembranfolie ablösen, so dass die Standzeit einer entsprechenden Filtermembranfolie bzw. einer entsprechenden erfindungsgemäßen Filtereinrichtung nochmals wesentlich verbessert werden kann. Hier braucht, im Gegensatz zum Stand der Technik, dem Abwasser kein Gas unter Druck beigemengt werden, um Turbulenzen zu erzeugen, die Störstoffe entfernen. Die Turbulenzstruktur selbst sorgt für die erforderlichen Turbulenzen an der Membranoberfläche, um die Oberfläche der Filtermembranfolie so frei von Störstoffen wie irgend möglich zu halten. Sollte bei einer derartigen Konstellation zusätzlich noch ein Gas unter Druck zugeführt werden, lassen sich die Turbulenzen noch bei weitem erhöhen und die erfindungsgemäße Filtereinrichtung bzw. die Filtermembranfolie gemäß der Erfindung hat eine wesentlich längere Standzeit. Eine Rückspülung bzw. Reinigung ist dann lediglich in längeren Zeitintervallen erforderlich und auch Reinigungsmittel kann eingespart werden, da die Oberflächenbelegung der Filtermembranfolie von vornherein geringer ist. Eine derartige Turbulenzstruktur kann z.B. wabenartig sein. Natürlich ist jede Form, die zu Turbulenzen führt durchaus willkommen, wobei aber eine wabenartige, quadratische oder sonst wie geartete Struktur mit durchgehenden Stegen noch weiter zu einer mechanischen Stabilisierung der Filtermembranfolie beitragen kann. Dabei kann die Turbulenzstruktur auch noch in ihrer Form dadurch beeinflusst werden, dass das Abwasser mit unterschiedlichen Drücken zugeführt werden kann. Auch die Strömungsgeschwindigkeit und der Belastungsgrad des Abwassers können auf die Form der Turbulenzstruktur einen Einfluss haben.

Es ist ferner zu erwähnen, dass natürlich auch andere Membranarten, als die hier beschriebene Filtermembranfolie mit den beschriebenen Turbulenzstrukturen versehen werden kann, und zwar mit den gleichen überraschend positiven Resultaten, dass nämlich Störstoffe, die die Membran zusetzen, ferngehalten werden können oder entfernt werden können, womit für beliebige Arten von Membranen eine erheblich längere Standzeit und damit Betriebsdauer erzielt werden kann. Auch insofern kann dieser Erfindungsteil auch als selbständige Erfindung angesehen werden, da die erfindungsgemäße Turbulenzstruktur nicht nur für Filtermembranfolien, sondern für beliebige Membranen bzw. Filterstrukturen zum Einsatz gelangen kann.

So kann beispielsweise bei gesinterten Membranen wie etwa Keramikmembranen die gewünschte Turbulenzstruktur vor oder nach dem sintern in die Membranoberfläche eingeprägt werden.

Versuche habe gezeigt, dass der Reinigungszyklus bei entsprechender Anwendung von Turbulenzstrukturen ganz erheblich verbessert werden kann und zudem noch eine Durchsatzleistung bewerkstelligt werden kann, die um einen Faktor von 4 gesteigert ist.

Damit können gemäß der Erfindung Filtrationsanlagen zur Erbringung einer bestimmten Filtrationsleistung ganz erheblich verkleinert werden und zudem ist erheblich weniger Energie, etwa Druck oder dgl. nötig, um derartige Filtrationsanlagen mit der gewünschten Sollleistung zu betreiben. Auch Reinigungsmittel können eingespart oder gar erübrigt werden.

Nachfolgend wird die vorliegende Erfindung anhand der beigefügten Figuren unter Bezugnahme auf vorteilhafte Ausführungsformen mit Merkmalen gemäß der Erfindung näher erörtert. Dabei werden weitere Merkmale, Zielsetzungen und Vorteile offenbart, die auf der bzw. den Erfindungen beruhen. In den Darstellungen zeigen:
- Fig. 1: eine Prinzipdarstellung eines Stapels mit Filtereinrichtungen in einem Rohrkörper in einer querschnittlichen Darstellung;
- Fig. 2: einen partiellen Querschnitt durch einen seitlichen Randbereich einer erfindungsgemäßen Filtereinrichtung;
- Fig. 3: einen Aufbau eines Stapels von Filtereinrichtungen mit Merkmalen gemäß der Erfindung in einem Teilquerschnitt;
- Fig. 4: eine vergrößerte Teilansicht eines Bestandteils gemäß Fig. 3 in einer längsschnittlichen Darstellung; und
- Fig. 5: eine Ausführungsform einer Turbulenzstruktur in einer Draufsicht.

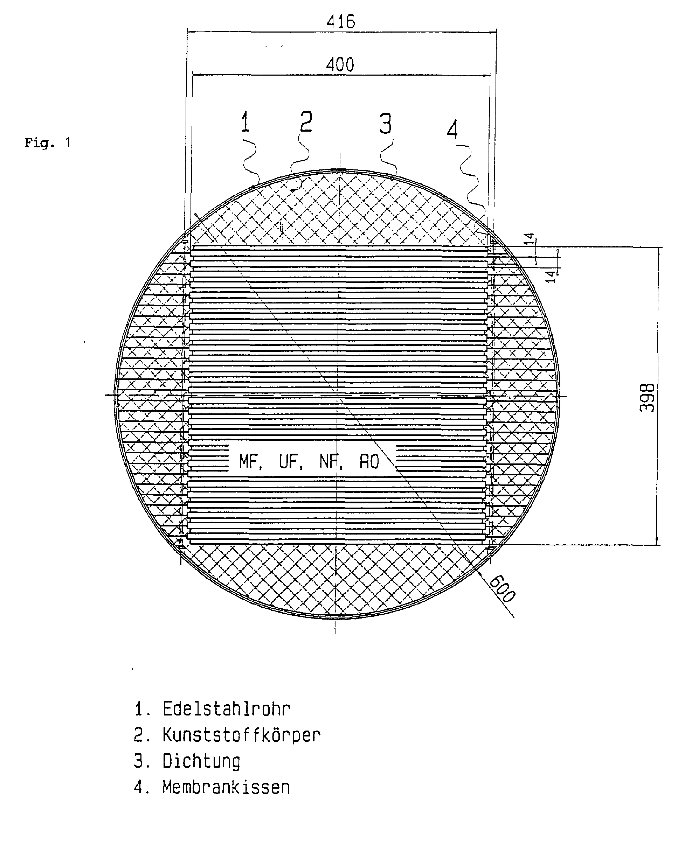

In Fig. 1 ist eine Strömungsleitung beispielsweise in der Form eines Edelstahlrohres 1 dargestellt, wobei in dessen Innerem eine Dichtung 3 vorgesehen ist. Ein Kunststoffkörper 2 dient als Träger einer größeren Anzahl an erfindungsgemäßen Filtereinrichtungen 4, die nachfolgend als Membrankissen 4 bezeichnet werden.

Die Membrankissen 4 können als Einschübe in den Kunststoffkörper ausgebildet sein, beispielsweise um bei Bedarf ausgewechselt zu werden. Natürlich können die Membrankissen 4 jeweils einzeln, beispielsweise über Klammern oder Schrauben festgelegt sein.

Die gemäß Fig. 1 dargestellte Anordnung ist prinzipiell eine übliche Anordnung, nur dass hier gemäß der Erfindung ausgebildete Membrankissen 4 zum Einsatz kommen.

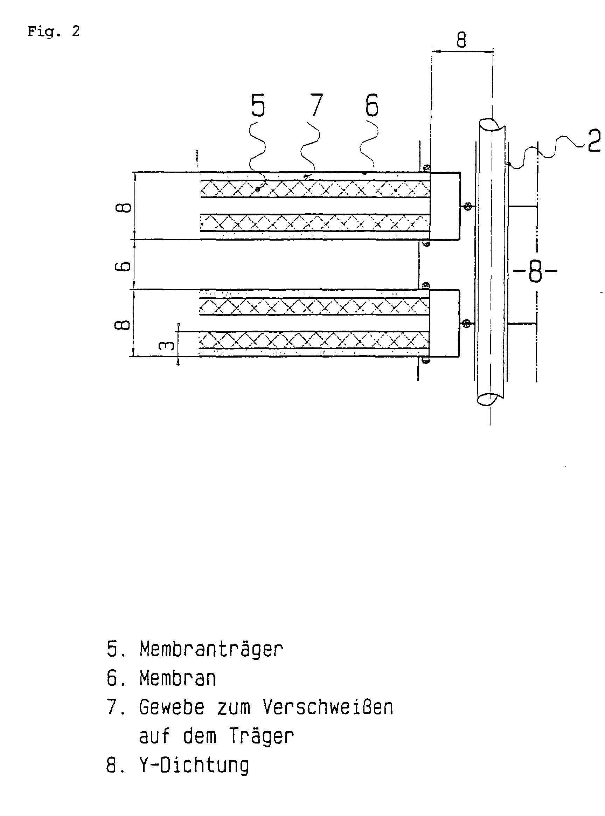

Die Fig. 2, die aus zwei Bestandteilen besteht, zeigt links seitliche Teilbereiche einer Ausführungsform einer Filtereinrichtung mit Merkmalen gemäß der Erfindung in einem Teilschnitt. Der rechte Teil der Fig. 2 zeigt einen Ableitungsendbereich einer erfindungsgemäßen Filtereinrichtung gemäß dem linken Teil, über den das Permeat abgeleitet wird.

Der linke Teil von Fig. 2 zeigt eine Membranfolie 6, die auf einem Membranträger 5 aufgebracht ist. Der Membranträger 5 kann beispielsweise ein Gewebe sein, dass mit mehreren Schichten versehen ist. Darauf folgend ist die Basis 5 vorgesehen, die die Anordnung aus Membranfolie 6 und Trägergewebe 7 abstützt und Leitungskanäle zur Abführung des Permeats darstellt. Zwischen den einzelnen Membrankissen 4 sind zur Abdichtung des Zwischenraumes Y-Dichtungen 8 vorgesehen. Bei der dargestellten Ausführungsform ist jeweils eine Basis 5 mit einem Gewebeträger 6 und einer Filtermembranfolie 7 versehen und diese Anordnung ist mit einer Ebene des Kunststoffkörpers 2 als Trägerkörper aufgebracht. Auf der anderen Seite der Ebene des Kunststoffkörpers 2 ist wiederum eine entsprechende Anordnung aus Filtermembranfolie 6, Gewebeträger 7 und Basis 5 vorgesehen. Eine Ableitung des Permeats kann jedenfalls entlang der jeweiligen Strukturen an der Basis 5 erfolgen, wobei das abgeleitete Permeat in einem Randbereich zusammengeführt und aus dem Edelstahlrohr gemäß Fig. 1 abgeführt werden kann.

Die dargestellte Anordnung wiederholt sich regelmäßig, um einen Membrankissenstapel auszubilden.

Der rechte Teil der Fig. 2 zeigt die seitliche Permeatableitung eines Membrankissens 4. Über die mittige Öffnung kann das Permeat aus dem Mittelbereich des Kissens analog dem anhand dem linken Teil der Fig. 2 erörterten Aufbau abgeführt werden.

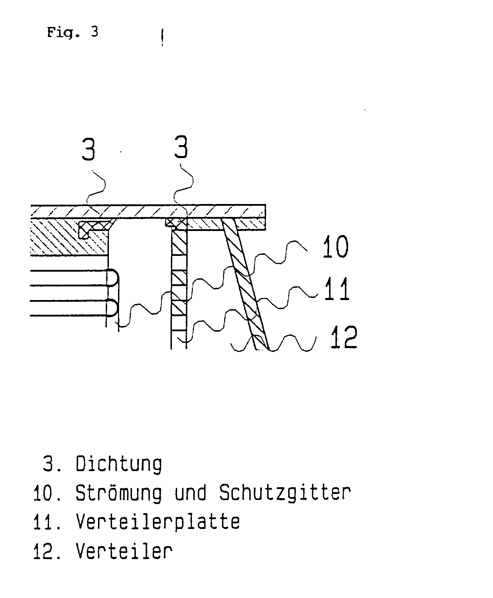

Die Fig. 3 zeigt in weiteren Einzelheiten einen Stapel mehrere Membrankissen und eine konkretisierte Konstruktion eines Stapels. Hier sind diverse Membrankissen über Dichtungen 3 gehaltert, um irgendwelche Leckströme an verschmutztem Abwasser bzw. an Permeat vermeiden zu können. Ein Strömungs- und Schutzgitter 10 dient dazu, das eingeleitete Abwasser aufzuteilen und etwaige große Bestandteile von den Oberflächen der Membranfolien fernzuhalten. Dem Strömungs- und Schutzgitter 10 ist eine Verteilerplatte 11 vorgelagert, die gleichfalls dafür sorgt, dass das zugeführte Abwasser gleichmäßig auf die verschiedenen Membrankissen verteilt werden kann, um so die Leistung der Filteranordnung zu optimieren und zu vermeiden, dass einige Filterkissen gegenüber anderen Filterkissen bevorzugt angeströmt werden. Dies verhindert eine vorzeitige Zusetzung eines Membrankissens vor anderen Membrankissen der gesamten Stapelanordnung. Ein noch vorgesehener Verteiler 12 sorgt für einen zunehmenden Leitungswiderstand, so dass an jedem Durchlassschlitz der Verteilerplatte 11 ein gleichmäßiges Angebot an Abwasser unter gleichmäßigem Druck bewerkstellig werden kann.

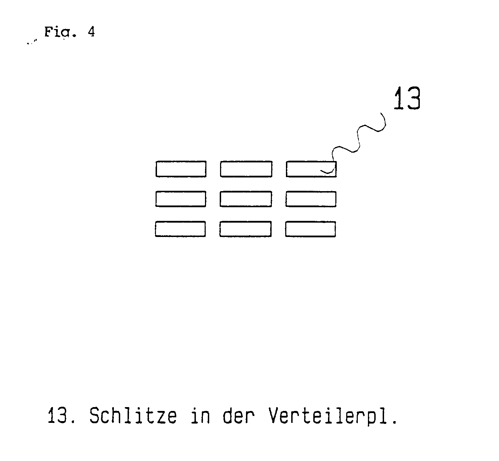

In Fig. 4 ist die Struktur von Schlitzen in einer Verteilerplatte dargestellt. Die Schlitze 13 können natürlich variabel ausgebildet werden, je nach Einsatzzweck, Abwasserart, Druck und dgl. Die Schlitze 13 sind in einer Verteilerplatte 11 vorgesehen, wie sie aus Fig. 3 ersichtlich ist.

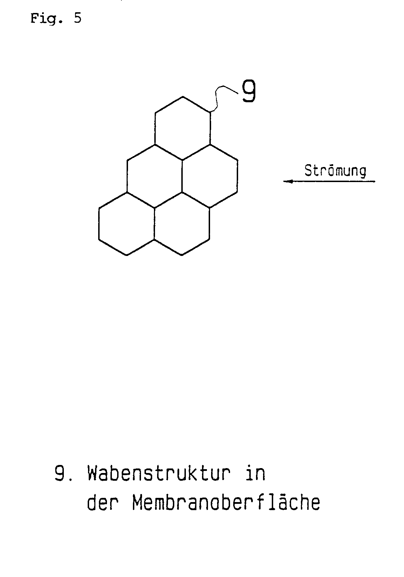

Letztlich zeigt Fig. 5 eine mögliche Form einer Turbulenzstruktur 9, die hier die spezielle Ausgestaltung einer Wabenstruktur einnimmt. Die Wabenstruktur kann nicht nur für die gewünschten Turbulenzen auf der Oberfläche der Membran 6 sorgen, sondern kann auch noch zu einer Stabilisierung (Versteifung) führen.

## Patentansprüche

1. Filtereinrichtung mit einer Filtermembranfolie für die Mikrofiltration, die Ultrafiltration, die Nanofiltration bzw. die Umkehrosmose, zur Filterung eines Mediums, **dadurch gekennzeichnet, dass** die Filtermembranfolie (6) auf einen für ein gefiltertes Medium durchlässigen Träger (7) aufgebracht ist.

2. Filtereinrichtung nach Anspruch 1, **dadurch gekennzeichnet, dass** der Träger (7) ein poröser Trägerabschnitt ist.

3. Filtereinrichtung nach Anspruch 1, **dadurch gekennzeichnet, dass** der Träger (7) ein mindestens einlagiges, bevorzugt mehrlagiges Trägergewebe ist.

4. Filtereinrichtung nach einem der Ansprüche 1 bis 3, **dadurch gekennzeichnet, dass** der Träger (7) nahe der Filtermembranfolie (6) weniger porös bzw. feiner ist als an der der Filtermembranfolie abgewandten Seite.

5. Filtereinrichtung nach einem der Ansprüche 1 bis 4, **dadurch gekennzeichnet, dass** der Träger (7) auf eine Basis (5) aufgebracht ist, die bevorzugt eine Struktur aufweist, so dass Strömungsleitungen, -kanäle oder dgl. für das gefilterte Medium, d.h. ein Permeat, eingerichtet sind, wobei der Träger mechanisch fest mit hervorstehenden Flächen, etwa Erhöhungen der Basis (5) verbindbar ist.

6. Filtereinrichtung nach einem der Ansprüche 1 bis 5, **dadurch gekennzeichnet, dass** die Filtermembranfolie (6) mit einer Turbulenzstruktur (9) versehen ist, wobei sich Erhebungen aus der Ebene der Filtermembranfolie bzw. Vertiefung in deren Ebene erstrecken.

7. Filtereinrichtung nach Anspruch 6, **dadurch gekennzeichnet, dass** die Turbulenzstruktur wabenartig ist.

8. Filtereinrichtung nach einem der Ansprüche 1 bis 7, **dadurch gekennzeichnet, dass** auf beiden Seiten einer flächigen Basis (5) ein Aufbau mit einer Membranfolie und einer Trägeranordnung vorgesehen ist.

9. Filtereinrichtung nach einem der Ansprüche 1 bis 9, **dadurch gekennzeichnet, dass** die Filtereinrichtungen als Einschubmodule ausgebildet sind.

10. Filtereinrichtung nach einem der Ansprüche 5 bis 9, **dadurch gekennzeichnet, dass** die Filtereinrichtung derart anschließbar ist, dass ein Permeat, das durch Filterung des zu filternden Mediums entsteht, über eine Basis bzw. deren Struktur abführbar ist.
